# EUROPÄISCHE PATENTANMELDUNG

(11) **EP 2 050 720 A1**
(43) Veröffentlichungstag der Anmeldung: **22.04.2009**
(21) Anmeldenummer: 07020173.6
(22) Anmeldetag: 16.10.2007
(51) Int. Cl.: C01G 29/00, C01G 30/00, C01G 51/00, C01G 53/00, C09C 1/00, B41M 5/26

(54) **Laser- und thermisch beschreibbare Oberflächenbeschichtung für Materialien**

(71) Anmelder: Mondi Business Paper Services AG, 3363 Ulmerfeld-Hausmening (AT)
(72) Erfinder: Schalkhammer, Thomas, Dr., 3072 Kasten Nr. 105 (AT); Palkovits, Roland Dr., 2700 Wiener Neustadt (AT); Kornherr, Andreas, Dr., 1100 Wien (AT)
(74) Vertreter: Landgraf, Elvira

(57) **Zusammenfassung**

Die Erfindung betrifft, Pigmente oder Beschichtungszusammensetzungen bestehend aus einer Mischung und/oder den Reaktionsprodukten aus zumindest einem Wismut- und/oder Antimonsalz (1) gewählt aus der Gruppe BiO(OH), Bi₂O₂CO₃, BiONO₃, , BiOCl, BiOBr, BiOF, Bi-thiosulfat, Bi-fluosulfat, Salzen von Wismut mit organischen Säuren oder den analogen Antimonverbindungen und/oder einem Metallsalz (2) gewählt aus der Gruppe der Salze von Silber, Kupfer, Nickel, Kobalt und Zinn, wobei zumindest eines der Salze einen thermischen Zersetzungspunkt unter 400 °C aufweist, sowie mit diesen Pigmenten oder Beschichtungszusammensetzungen beschichtete Materialen.

## Beschreibung

Die Erfindung bezieht sich auf eine neuartiges Verfahren zur farbgebenden Beschriftung der Oberflächen von Papier, Etiketten, Folien, Kunststoff, Metall, keramische Oberflächen, Kunst- und Natursteinen, Lackschichten oder Korrosionsschutzschichten. Die Erfindung beschreibt Pigmente oder Färbemittel, die für Laser- oder thermische Markierung verwendet werden können, und insbesondere Wismut- und/oder Antimonsalze sowie ein weiteres thermolabiles Metallsalz enthalten sowie Methoden für deren Herstellung und Verwendung.

Farbgebende Beschriftungen von Materialien, wie Papier, Etiketten, Folien, Kunststoffen oder anderen Oberflächen erfolgen meist durch Drucken, beispielsweise mittels Flexo-, Offset- oder Tiefdruckgeräten für zumeist großvolumige Anwendungen oder via Drucker (bekannterweise zumeist Tintenstrahldrucker und Laserdrucker) oder für kleinvolumige Anwendungen an Ort und Stelle bzw. zur Bedruckung von Waren als Thermodrucker mit Thermopapier, Thermoetiketten oder thermosensitiven Schichten auf Verpackungen.
Dazu wird der Drucker mit Druckfarben- bzw. Tonerpatronen bestückt, die darin enthaltenden Pigmentzusammensetzungen werden beim Druck auf dem zu bedruckenden Material abgelagert oder ein bereits auf der Oberfläche aufgebrachtes Pigment wird via Hitzeeinwirkung farblich verändert (weiß auf schwarz, transparent auf weiß-trüb,...)

Die Verwendung von Titandioxid als Laser markierbares Pigment ist in US-A 5,091,284 offenbart. Von Titandioxid produzierte Laserzeichen weisen jedoch nur schwache Kontraste auf und benötigen relativ hohe Laserenergie.

Wismutbasierte lasermarkierbare Pigmente werden von Dreher et al. in US-A 7,169,471 beschrieben. Dreher beschreibt ultradünne Pigmente aus Wismutverbindungen (weniger als 100 nm dick) bevorzugt aus plättchenförmigem BiOCI, Wismutsalzen und analogen Bleiverbindungen als Lüsterpigmente. Er benötigt substantielle Laserenergie um die Pigmente farblich zu verändern.
Sakoske et al. beschreiben in JP-A 2002206062 Wismutpigmente für die Lasermarkierung mit der Formel BiₓMetall_{y}O_{z}. Als Metall werden 23 verschiedene Metalle genannt - mit unterschiedlichsten Redox- und Farbeigenschaften.
Fueubaa et al. JP8187951 beschreibt Kupfersalze als mögliche Marker für Lasermarkierung.
Ebenso beschreibt die WO 01/23189 A Kupferchromit als mögliches Lasermarkermaterial.
Aus der WO 00/78554 A ist die Verwendung von Wismutoxid, Antimonoxid, Bleioxid, Vanadiumoxid, Molybdenoxid, Silikatenund Aluminosilikaten als lasermarkierbare Pigmente bekannt.
JP-A 4198366 beschreibt die Mischung aus einem Harz mit Wismutoxid als YAG-Laser markierbare Farbe.
Die Synthese von metallischem Kupfer durch Laserbestrahlung wird in DE- A 4210400, in US-A 5,176, 744 und in JP-A 2000328252 (hier aus Kupferformiat) beschrieben.

Obwohl viele verschiedene Arten von Pigmenten bekannt sind, existiert ein Bedarf für ein Pigment bzw. für eine Beschichtungszusammensetzung das/die hohen Kontrast zu produzieren vermag, haltbarer ist und mit so geringer Laserenergie geschrieben werden kann, dass auch Schichten auf thermisch nicht belastbaren Materialien wie Papier, Etiketten, Pappe oder niedrige schmelzbaren Kunststoffen ohne deren Zerstörung beschriftet werden können.

Aufgabe der vorliegenden Erfindung ist es daher ein in Qualität und Farbkontrast verbessertes Pigment bzw. eine Beschichtungszusammensetzung bereitzustellen, welches mit so geringer Laserenergie beschrieben werden kann, dass es selbst auf Oberflächen wie Papier, Pappe, PE oder PP ohne Zerstörung derselben als Drucksystem mit bevorzugt schwarzer Druckfarbe eingesetzt werden kann und hier z.B. als Ersatz für Thermopapier dient.

Gegenstand der Erfindung sind daher Pigmente bestehend aus einer Mischung und/oder den Reaktionsprodukten aus zumindest einem Wismut- und/oder Antimonsalz (1) gewählt aus der Gruppe BiO(OH), Bi₂O₂CO₃, BiONO₃, , BiOCl, BiOBr, BiOF, Bi-thiosulfat, Bi-fluosulfat, Salzen von Wismut mit organischen Säuren oder den analogen Antimonverbindungen und/oder einem Metallsalz (2) gewählt aus der Gruppe der Salze von Silber, Kupfer, Nickel, Kobalt und Zinn, wobei zumindest eines der Salze einen thermischen Zersetzungspunkt unter 400 °C aufweist.

Die Beschichtungszusammensetzungen können ferner ein Bindemittel aufweisen. Als Bindemittel kommen beispielsweise (modifizierte) Stärke, PVB, PVA, PVB/PVAc, Cellulose, CMC, Proteine, wie Casein, Polyacrylsäuren und andere Polymere in Frage.

Die Salze (1) und/oder Metallsalze (2) können als Oxalate, Carbonate, Formiate, Acetate, Citrate, Tatrate, Hydroxide, Carbonate, Phosphate, Hypophosphite oder als deren basische Mischsalze vorliegen.
Zusätzlich zu den Metallsalzen können Reduktionsmittel zugegeben werden oder Anionen für diese Metallsalze gewählt werden, die thermisch aktivierbar sind wie beispielsweise Salze der Ameisensäure, Oxalsäure, reduzierende Stickstoffwasserstoffverbindungen, wie Hydrazine, oder anorganische Reduktionsmittel wie Zinn(II)salze, Hypophosphite, Dithionite oder Borwasserstoffverbindungen.

Die Partikel der Metallsalze (1 und 2) weisen vorzugsweise eine Größe von maximal drei Millimeter, besonders bevorzugt eine Größe von 0,5 bis 50 Mikrometer auf.

Als Salz (1) wird vorzugsweise Wismutsubcarbonat, Antimoncarbonat oder das Salz einer organischen Säure von Wismut oder Antimon, beispielsweise ein Oxalat oder Formiat gewählt.
Besonders im Fall von Wismut- oder Antimonformiaten kann gegebenenfalls der Anteil an Metallsalz in der Mischung auf 0 reduziert werden.
Als Metallsalz (2) wird in dieser Konstellation vorzugsweise Kupferformiat, Nickelformiat, Nickelcarbonat, Nickelhydroxid Kobaltformiat und/oder Kobaltcarbonat und/oder Kobalthydroxid gewählt.

Der Mischung können noch weitere Metallsalze vorzugsweise Mangan-, Kobalt- , Chrom- und Eisensalze zugegeben werden.

Pigmente oder Beschichtungszusammensetzungen nach einem der vorhergehenden Ansprüche, dadurch gekennzeichnet, dass als Salz (1) Wismutsubcarbonat durch andere Wismutsalze ganz oder teilweise ersetzt wird.

Falls als Metallsalz ein Formiat eingesetzt wird, kann das Formiat durch andere thermolabile bevorzugt reduzierende Anionen ganz oder teilweise ersetzt werden, vorzugsweise durch Hypophosphite Acetate, oder Salze organischer Säuren.

Das Salz bzw. die beiden Salze (1 und 2) können mit einer Schicht einer weißen Verbindung umhüllt sein oder mit weißen Partikeln vermischt sein, die nach Auftreffen der thermischen Energie transparent wird oder sich zumindest farblich stark abschwächt.

Als Hülle kann die Wismut- oder Antimonverbindung (1) selbst dienen und vorzugsweise selbst in ein farbiges Pigment bevorzugt schwarzes Pigment umgewandelt werden.

Ein weiterer Gegenstand der Erfindung sind Materialien, insbesondere Papier, Etiketten, Pappe, Wellkartons, Folien, spritz- oder druck-gegossene Kunststoffteile, Metall, keramische Oberflächen, Lackschichten oder Korrosionsschutzschichten beschichtet mit einer Mischung und/oder den Reaktionsprodukten aus zumindest einem Wismut- und/oder Antimonsalz (1) gewählt aus der Gruppe BiO(OH), Bi₂O₂CO₃, BiONO₃,, BiOCl, BiOBr, BiOF, Bi-thiosulfat, Bi-fluosulfat, Salzen von Wismut mit organischen Säuren oder den analogen Antimonverbindungen und/oder einem Metallsalz (2) gewählt aus der Gruppe der Salze von Silber, Kupfer, Nickel, Kobalt und Zinn, wobei zumindest eines der Salze einen thermischen Zersetzungspunkt unter 400 °C aufweist. und der gesamte Aufbau durch die Einwirkung von Licht oder durch direkten Kontakt oder starke Annäherung an heiße Objekte räumlich definiert und strukturiert für das menschliche Auge erkennbar farblich verändert werden kann.

Es hat sich überraschenderweise gezeigt, dass Mischungen und Reaktionsprodukte von Salzen von Wismut oder Antimon mit Salzen von Ag, Cu, Ni, Co und Sn die gewünschten Eigenschaften aufweisen, wobei primär leicht ersetzliche Anionen die nötige chemische Energie für die Reaktion liefern.

Insbesondere reduzierende Anionen wie Formiate, Oxalate oder Hypophosphite können bei thermischer Aktivierung durch den Laser die nötige chemische Energie bereitstellen. Primär aber nicht ausschließlich werden die Antimon- und Wismutsalze aus ihrer ionischen Form in Metallpartikel übergeführt, deren Streufarbe ein dunkles Grau oder Schwarz ist. Die im Rahmen der Reaktionen entstehenden Metalle oft Kupfer (rotgelb), Nickel (schwarzgrau), o.ä. verändern den gebildeten Farbton. In Anwesenheit von Luft kommt es auch zu einer partiellen Oxidation der Metallsalze.
So werden auch schwarzes Kupferoxid, schwarzblaues Kobaltoxid, schwarzes Nickeloxid oder andere Mischoxide gebildet. Erfindungsgemäß wichtig ist es, dass die Umwandlung der erfindungsgemäßen Pigmente bereits bei sehr niedrigen Temperaturen abläuft und schwarze, oder sehr dunkle Reaktionsprodukte mit hohem Farbkontrast liefert.

Hier sind die beschriebenen Pigmente den bekannten Farbsystemen z.B. aus Thermopapier zumeist deutlich überlegen. Die Stabilität der Produkte zeichnet die erfindungsgemäßen Pigmente gegenüber Thermopapier oder thermisch beschreibbaren Etiketten aus.

Die Metallsalzmischung bzw. die Reaktionsprodukte der beiden Salze nach deren Inkubation in bevorzugt wässriger Suspension (bzw. Lösung) ist entweder direkt auf die Oberfläche des Trägermaterials (mit oder ohne Bindemittel) aufgebracht oder jedoch auch auf Pigmentpartikeln welche ihrerseits auf einer Oberfläche an das Trägermaterial gebunden sein können. Diese Struktur kann gegebenenfalls zum Schutz mit einem transparenten Schutzfilm überzogen sein.

Als Trägermaterial kommen Papier, Etiketten, Pappe, Wellkartons, Pigmentpartikel, Folien, spritz- oder druck-gegossene Kunststoffteile, Metall, keramische Oberflächen, Lackschichten oder Korrosionsschutzschichten in Betracht.

Der gesamte Aufbau wird durch die Einwirkung von Licht, primär Laserlicht oder einer anderen Lichtquelle ausreichender Stärke, oder durch direkten Kontakt oder starke Annäherung an heiße Objekte räumlich definiert und strukturiert farblich verändert, wobei beliebige Zeichen, Buchstaben, Zeichenketten Muster, Linien Bilder, Symbole, Designs oder graphische Information durch eine. Reaktion der Wismut- bzw. Antimonverbindung mit thermischen - primär aber chemisch reduzierenden - Zersetzungsprodukten des Metallsalzes sichtbar werden.

Die Erfindung beruht dabei auf einem neuartigen Drucksystem das Materialien direkt mit dem Wärme und/oder Licht vorzugsweise Laser beschreibbar macht.

Im Gegensatz zu einem herkömmlichen Laserdruck oder Tintenstrahldruck oder ähnlicher Druckverfahren ist hierbei die Farbe bzw. deren Vorstufe als Nanoschicht bereits im Material integriert und wird durch das Laserlicht nur örtlich gezielt verändert.

Die Laserbeschriftung von Folien, Papier Etiketten und Pappe unter der Verwendung der erfindungsgemäßen Pigmente, unterscheidet sich von üblichen Thermopapieren und Thermoetiketten durch eine Vielzahl von Eigenschaften.
- über viele Jahre stabile Farbe (kein Ausbleichen wie Thermopapiere)
- hoher Kontrast (im Gegensatz zu den meisten Thermopapieren)
- keine organisch-reaktiven Farbkomponenten mit hohem Allergiepotential
- nahezu reines Schwarz erzielbar (wie Russ-basierter Lasertoner)
- Sichtbare und unsichtbare Elemente kombinierbar
- gut Maschinen-lesbar durch hohen Kontrast (Scannerkassen,..)
- Extreme thermische Stabilität (keine Veränderung bei heißem Klima,..)
- anwendbar für Barcode und Labeltechnik

Auch die Verwendung von täglich dem Licht ausgesetzten Produkten wie Druckwaren, Papier oder Folien im Außenbereich kann auf Grund der bleichechten Färbung als wichtiger Einsatzbereich des neuen Produktes gesehen werden.

Der Aufbau besteht zumindest aus der Oberfläche eines Trägermaterials, einer Schicht des erfindungsgemäßen Pigments zumeist gebunden mit einem Bindemittel und gegebenenfalls einer Deckschicht.

Um eine klare Farbgebung ohne Korn zu erhalten, wird der Durchmesser der Partikel vorzugsweise kleiner als 50 µm gewählt, besonders bevorzugt kleiner als 20 µm - jedoch werden kolloidale Größen zumeist vermieden um ein zu weites Eindringen in das Trägermaterials (bei porösen Materialen wie z.B. Papier) mit dem Pigment zu vermeiden.

Erfindungsgemäß werden primär farbige Partikel aus deren chemischen Vorstufen erzeugt, wobei Umwandlungstemperaturen von mehr als 80°C Celsius (Thermostabilität bei Trockenprozessen!) und weniger als 300 °C (Thermische Zerstörung des Trägermaterials) bevorzugt werden. Nur so kann der Laser in der zur Verfügung stehenden Zeit (typischerweise µs) die Schicht chemisch durchgehend und dauerhaft so verändern, dass die Farbe visuell geändert wird. "Massive" Schichten führen zu einer starken Eigenerwärmung der Materialien, welche z.B. bei Papier zu einer "Brandbeschriftung" mit entsprechender Abgasmenge und eventuell toxikologisch bedenklichen Produkten führt. Erfindungsgemäß kann das Drucksystem durch den Einsatz von selektiven thermosensitiven Strukturen dieses Problem vermeiden und durch eine chemische Umwandlung von Teilen der Struktur ohne signifikante Abgabe von gasförmigen Produkten den Schreibvorgang im Büroumfeld ermöglichen.

Die Generierung der farbigen Pigmentpartikel durch thermische Umwandlung erzeugt in-situ einen zumeist dunklen Farbton nach Reaktion einer farblosen oder schwach gefärbten Schicht der Precursorverbindungen. Beispielhaft kann hier die Umwandlung von Silberacetat in dunkle oxidische Pigmente, die Umwandlung von Wismutsalzen wie z.B. Wismutoxalat, basisches Wismutcarbonat oder basisches Wismutnitrat in dunkle, gelbe, orange oder braune Pigmente, die Umwandlung von Nickeloxalat oder Kobaltoxalat in schwarze bzw. dunkel gefärbte Oxide, die Umwandlung von labilen Kupferverbindungen in Kupferoxide oder metallisches Kupfer genannt werden. Dies sind bekannte Prozesse.
Alle diese Reaktionen laufen bei Temperaturen von unter 300 °C, bevorzugt um etwa 200 °C ab. Für spezielle Papiere sind auch niedriger Umsetzungstemperaturen denkbar. Extrem reaktive Verbindungen, die bereits unter 80°C eine chemische Umwandlung zeigen werden primär nicht eingesetzt, da sie die nötige Langzeitstabilität und Prozessierbarkeit der Materialen negativ beeinflussen würden

Auf stabilen Oberflächen kann die Pigmentschicht direkt aufgebracht werden, Papier und große insbesondere 3-dimensionale Objekte werden hier mit kleinen Partikeln mit der oben beschrieben Struktur überzogen.
Papier kann jedoch auch direkt mit dem Farbeffekt versehen werden und die Papiermatrix aus Zellulosefaser, Füllstoff und Additiven mit den Chemikalien überzogen werden - die beobachteten Farben sind durchaus sehr intensiv und farbstark.

Eine eventuelle Nachbeschichtung der Oberfläche erfolgt vorzugsweise mit einem Material, welche in der Lage ist die Laserenergie aufzunehmen, die Hitze an die Partikelschicht bzw. deren Precursor weiterzuleiten und den gesamten Aufbau zu schützen. Bei einer Wellenlänge des verwendeten Lasers von z.B. 10 µm sollte diese Schicht einige Mikrometer stark sein, damit die Laserenergie mit maximaler Intensität absorbiert werden kann.
Als Laserlicht-absorbierende Zusätze kommen beispielsweise Partikel aus Glas, Keramik oder Silikaten in Frage.

Viele Polymere sind hierzu geeignet beispielsweise PVP, PVAc, PVP-co-PVAc, PVA, Cellulose und deren Derivate wie Ether oder Ester, Stärke und deren Derivate für Papier, Etiketten und pappeartige Träger, bis zu Epoxidharzen und Alkydharzen für langzeitfeste Beschriftungen auf Metall und Kunststoffoberflächen. Bevorzugt verwendet werden hier Polystyrol, Polyvinylacetat, Celluloseestern oder Ethern, anderen Vinylpolymeren, Acrylaten, Methacylaten, Polyalkydharzen, oder deren Mischpolymeren bzw.
Mischungen besonders bevorzugt Polystyrollatex.

Die Pigmentschichten werden durch chemische Prozesse, adsorptive Anlagerung aus Lösung, Anfiltern, kovalente Kopplung aus Lösung, oberflächen-katalysierte Verfahren, Aufsprühen oder Drucken mittels bekannter Druckverfahren, wie Flexo- Tief-, Sieb-, Offset- Digitaldruckverfahren. Walzenauftragsverfahren mit Gleich- oder Gegenlauf, Curtain-Coating, Blade-Coating, Aufrakeln und dergleichen direkt auf das Material aufgebracht. Die Pigmentpartikel werden zumeist in den branchenspezifischen Auftragsprozessen auf die Oberfläche der zu bedruckenden Objekte übertragen und dort gebunden.

Das Metallsalz wird aus dem "mittleren Bereich" des Periodensystems oder entsprechend der Redox-Reihe, insbesondere Kupfer, Nickel, Mangan, Kobalt und Chrom gewählt. Andere Metall können aus Kostengründen (Au, Pt, ...) oder chemischen Gründen (chemisch zu niedriges Redoxpotential bedeutet zu leicht oxidierbares bzw. korrodierbares Metall) nicht verwendet werden.

Es können erfindungsgemäß zur Erzielung eines Druckbildes Salze oder deren Mischungen aus Wismut- oder Antimonsalz und/oder einem weiterem Metallsalz thermisch-optisch modifiziert werden um so die gewünschten drucktechnischen Farbeffekte zu erreichen.
Die erfindungsgemäßen technologischen Neuerungen sind:
- Farbstabil, nicht bleichbar bedruckte Papiere, Folien und Materialoberflächen
- Erzeugung und Veränderung der Farbe durch lokale Lichtenergie oder Wärmetransfer
- Schwarze thermochrome Farbe von hohem Kontrast erzeugt durch, lokale Lichtenergie oder Wärmetransfer

Die für die thermische Beschriftung benötigten Lichtquellen weisen bevorzugt geringe Strahlendivergenz, geringe Linien-/Bandbreite: (eine schmale Linienbreite ist die Frequenzreinheit der erzeugten Strahlung), große Energiedichte (durch die starke Bündelung und die Selbstverstärkung der Laserstrahlen im Resonator) und große zeitliche und räumliche Kohärenz. Damit sind primär Laser als Lichtquellen geeignet. Andere Lichtquellen sind nach geeigneter optischer Aufbereitung ebenfalls zu verwenden (LEDS,

Hochenergielampen mit Hg, oder Metalldampf o.ä.) weisen jedoch oft zu geringe Energiedichte auf. Thermische Auslösung des Effekts durch heiße Oberflächen ist ebenfalls möglich und kann analog den Thermodruckern vorgenommen werden.

Mögliche Lasertypen sind Festkörper-Laser, Halbleiter-Laser, Flüssigkeits-Laser, Gas-Laser und chemische Laser. Basierend auf dem physikalische Verfahren unterscheidet man: optisch gepumpte Laser, Gasentladungslaser und chemische Laser, bei denen die Pumpenergie durch chemische Prozesse geliefert wird.

Als Schreibsystem auf Lichtbasis dient bevorzugt zumeist ein versiegelter Kohlenstoffdioxid- (CO₂) Laser, der intensive und unsichtbare Laserstrahlung mit einer Wellenlänge von 10,6 Mikron im infraroten Spektrum produziert oder eine Laserdiode im nahen IR- oder Rotbereich. Das Lasersystem enthält zumeist einen Klasse 4 Laser oder eine adäquate Anzahl von Lasern geringer Leistung. Die folgenden Sicherheitsmerkmale müssen in das System integriert werden, um jedoch der Klasse 1 Klassifizierung zu entsprechen. Das Schreibsystem ist völlig in einem Schutzgehäuse eingeschlossen. Dieses verdeckt den Laserstrahl unter normaler Verwendung vollständig. Das System hat ein Sicherheitssperrsystem. Das Öffnen des Gehäuses schaltet den CO₂ Laserstrahl aus.
Der unsachgemäße Umgang mit dem Lasersystem wird durch technische Vorrichtungen ausgeschaltet da der Laserstrahl physische Verbrennungen und schwerwiegende Augenschäden verursachen kann. Dämpfe und Rauch beim einem optimierten Schreibprozess sind minimal da es sich hierbei nicht um Gravierprozess mit Prozessgasen handelt jedoch soll die geringfügig Abtragung von Material wenn nötig durch ein Aktivkohlefilter gebunden werden. Der Druckertreiber und der Computer kontrollieren das Lasersystem.

Das Lasersystem dient als ein Schreibsystem - ein sehr hochwertiger Drucker/Plofter. Alternativ kann aber auch ein thermischer Schreibkopf (analog jenem für Thermopapier) eingesetzt werden um das Papier zu beschreiben. Ein Rasterdrucker macht Vor- und Zurückbewegung um das Zeichen zu erstellen, während ein Vektorplotter dem Umriss des Zeichens folgt. Ein Lasersystem beherrscht sowohl Raster- als auch Vektorbewegungen. Der Lasersystemdruckertreiber arbeitet direkt mit Windows, Unix (Linux,..) o.ä Anwendungsprogramm zusammen, um die richtige Abbildung an das Lasersystem zu senden.

Die Laserintensität kann so gesteuert werden, dass ein reines schwarz - weiß Bild entsteht oder so, dass bei jeder der graphischen Zeichnung die verwendete Farbe einen Prozentsatz der Intensität von 0 - 100 % zugewiesen erhält. Da der Laser proportional gepulst oder seine Intensität anders gesteuert wird ist, stellt dieser Prozentsatz dar wie lange die Laserpulse dauern oder wie hoch die Intensität des Laserlichts ist. Grundsätzlich wird die Intensitätseinstellung direkt darauf bezogen, wie tief der Farbeffekt ist. Hohe Intensitätseinstellungen und hohe Geschwindigkeiten produzieren ähnliche Effekte wie geringe Intensität und langsame Geschwindigkeit (d.h.bei geringerer Druckgeschwindigkeit des Systems). Im Rastermodus entspricht oft PPI (Laserpulse/inch) den typischen dpi-Werten eines Druckers.
Geringe Pulswerte bei sehr hoher Energie führen zur Perforation des Papiers - dies ist nicht anzustreben da hier eventuell toxische Abgase gebildet werden die einer entsprechenden Absaugung bedürfen.

Physikalisch betrachtet unterteilt sich die Wechselwirkung zwischen Strahlung und Materie in vier Kategorien: Aufheizen, Schmelzen, Verdampfen und lonisieren. Welche dieser Kategorien verwendet wird, hängt sowie von der Anwendung (Schweißen, Löten, Schneiden, Bohren, Beschriften...) ab, als auch vom Material. Um eine klare Kontur der Markierung zu erhalten, muss eine zu weite Ausbreitung der Wärmeeinflusszone verhindern werden. Erreicht wird dies durch eine sehr hohe Energiedichte, wodurch das Material innerhalb von sehr kurzer Zeit erhitzt wird - eine gezielte Verbreiterung wird jedoch oft gewünscht um einzelne im Pixelmodus geschriebene schwarze Punkte zur einer schwarzen Fläche zu vereinigen und "Blitzer" zu vermeiden.

Beim Verfärben von Kunststoffen wird eine Markierung ohne Beeinträchtigung der Oberflächenqualität durch lokale Veränderung der Farbe erreicht. Durch geeignete Wahl des Kunststoffes in Kombination mit der Wellenlänge des Laserlichts wird bei der Bestrahlung ein Farbumschlag erzeugt. Entsprechend der Auswahl der Werkstoffe können mit dem Verfahren Markierungen unterschiedlicher Farbe erzeugt werden. Weiterhin gibt es auch bei Kunststoffen die Möglichkeit, durch Materialabtrag ein Schwarz-weiß zu erzeugen. Beispielsweise können lichtundurchlässige Materialschichten abgetragen und das transparente Grundmaterial freigelegt werden. Dadurch können Markierungen, die durch Lichteinfall von vorn und Beleuchtung von hinten erkennbar sind, erzeugt werden. Eine weitere Möglichkeit ist das Erhitzen des Kunststoffs durch den Laser, so dass ein Aufwurf entsteht. Dieser Aufwurf bleibt auch nach der Abkühlung erhalten und stellt somit die Markierung dar. Diese Hochtemperatureffekte erzeugen jedoch eventuell toxische Abgase und Materialänderungen und sind im Bürobetrieb unerwünscht bzw. untragbar. Das erfindungsgemäße Pigment kann die gewünschten Effekte in dünnen Schichten ohne massive Emission von Abtrageprodukten erzielen.

Als reaktive Schichten können erfindungsgemäß alle Schichten des Aufbaus verwendet werden, die zur Farbgebung beitragen. Hierbei ist insbesondere auf die Interaktion mit dem Laser zu achten um die nötige Energie optimal zu nutzen und damit die Schreibgeschwindigkeit zu maximieren.
Ein CO2-Laser kann auf eine Wellenlänge von 10.6 µm eingestellt werden (Standardeinstellung) oder nahe 9.6 µm. Diese Wellenlänge wird von Silikaten und ähnlichen Strukturen deutlich besser (Unterschied mehr als eine Zehnerpotenz) aufgenommen. Ein Nd:YAG Laser (1.06 µm) kann ebenfalls verendet werden benötigt aber gegebenenfalls den Einsatz eines zusätzlichen Chromophors zur gerichteten Einbringung der Laserenergie.

Um Laserenergie optimal in einer Schicht zu absorbieren kann dem Material ein Farbstoff, vorzugsweise ein anorganisches Salz mit 0.1 bis 5 Gewichtsprozent, zugegeben werden - hierbei sind Kupfersalze, Chromsalze oder seltene Erden mögliche Chromophore.

Der erfindungsgemäße Aufbau einer Beschichtung mit den erfindungsgemäßen Pigmenten ist durch eine Zeichnung erläutert.

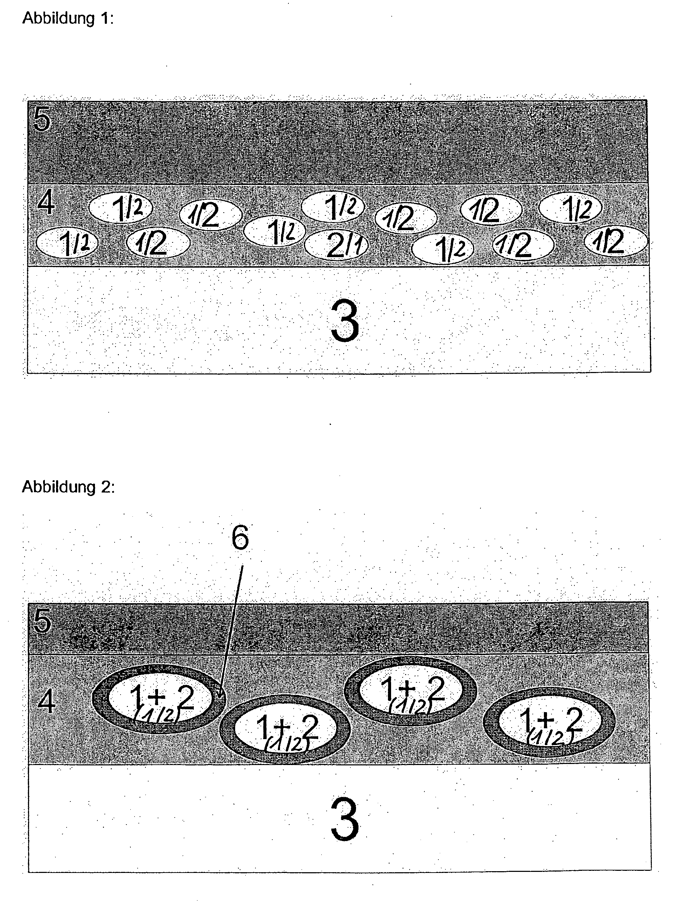

Abbildung 1: Aufbau der Pigmentschicht

Abbildung 2: Aufbau der Pigmentschicht mit weißer Hüllschicht

Die Bezugszeichen sind wie folgt zuzuordnen:
1 Wismut und/oder Antimonsalz als Pigment oder molekulare Lösung im Bindemittel 4
2 Salz von Silber, Kupfer, Nickel oder Kobalt als Pigment oder molekulare Lösung im Bindemittel 4
3 Trägermaterial aus der Gruppe Papier, Etiketten, Pappe, Wellkartons, Folien, spritz- oder druck-gegossene Kunststoffteile, Metall, keramische Oberflächen, Lackschichten oder Korrosionsschutzschichten
4 Bindemittel bevorzugt aus der Gruppe polymere organischer Bindemittel
5 Deckschicht als Schutz und/oder Laserenergiekonversionsschicht
6 Hülle aus weißem Pigment allenfalls Wismut oder Antimonsalz (1)

Alternativ können das Salz (1) und/oder das Metallsalz (2) zuerst in zumeist wässriger Suspension bzw. Lösung zusammengebracht und als "ein" Pigment in die Schicht eingebracht werden. Hier wird einer Entmischung und Farbsprenkeln vorgebeugt. Auch eine chemische Reaktion der beiden Pigmente kann vorteilhafterweise in Lösung vorab erfolgen und die Reaktionsprodukte oder deren Mischung als Pigment aufgebracht werden.

Dieser Aufbau ist in Abbildung zwei unter der Bezeichnung "1 + 2" beschrieben - als Mischung und/oder Reaktionsprodukte des Wismut- und/oder Antimonsalzes und des Salzes von Silber, Kupfer, Nickel oder Kobalt in einem Pigmentpartikel (mit zusätzlicher Hülle eines Weißmachers). Der Weißmacher kann aber auch dem Bindemittel (4) oder der Deckschicht (5) zugegeben werden.

Die folgenden Beispiele beschreiben die technische Realisierung ohne diese zu beschränken.

### Beispiel 1. Wismut - Kupfer Beschichtung auf Papier

Wismutsubcarbonat wird in variablem Mengenverhältnis mit Kupferformiat in wässriger Suspension gerührt. Es wird ein Filmbildner wie Polyvinylpyrrolidon, Hydroxyethylcellulose, Carboxymethylzellulose, Polyvinylalkohol, PVP-co-Polyvinylacetat oder vergleichbare Polymere zugegeben und bis zur Auflösung gerührt. Die Mischung wird in einer Coatingmaschiene (z.B. Papiermaschine mit Streichwerk) in dünner Schicht auf das Trägermaterial z.B. Papier aufgebracht. Es entsteht eine hellblaue bis helltürkise Papieroberfläche. Mit etwa 3-5 Watt Laserenergie wird das weiß-blaue Material in ein schwarzes Pigment umgewandelt.

### Beispiel 2. Wismut - Kupfer Beschichtung auf Papier 2

Wismutcitrat wird an Stelle von Wismutsubcarbonat verwendet und ansonsten wird wie in Beispiel 1 verfahren.

### Beispiel 3. Beschichtung

Pigmente laut Beispiel 1 und 2 werden mit einem Coatingmittel, bevorzugt einem Polymer, vermischt und auf die Oberfläche eines Objekts aufgebracht. Danach wird zumeist eine Deckschicht aus einem weiteren bevorzugt organischen Polymer (bei Außenanwendung jedoch auch ein anorganischer z.B. Sol-Gel Überzug) aufgebracht. Die Schichtdicke des Überzugs beträgt zwischen 0.1 und 100 µm, bevorzugt zwischen 1 - und 20 µm. Die Deckschicht dient nicht nur zum Schutz der farbigen Schichten sondern nimmt oft aktiv Laserenergie auf und leitet sich als Hitze und/oder chemische Energie and die Pigmente /bzw. Precursorschicht weiter.

### Beispiel 4 : Abtönen der Pigmente nach weiß

Normalerweise sind weiße Pigmente mit und hoher Opazität in Papieranstrich, Farben, kosmetischen Produkten und für vergleichbare Zwecke aus anorganischen Materialien zusammengesetzt. Auch organische Pigmente auf Basis von Styrol-Butadien und Hamstoff-Formaldehyd sind als weißer Latex vermarktet worden. Während Duroplaste für die Lasermarkierung mit niederer Energie ungeeignet sind können schmelzbare Thermoplaste als reversible Weißmacher eingesetzt werden und vorhandene Farbtönungen abzumildern und dem Papier einen weißen Strich zu geben. Auch weiße Pigmente auf Stärkebasis sind bekannt um dem Papier eine weitreichende biologische Abbaubarkeit zu ermöglichen.
Als weißes organisches Pigment ist ein aus hohlen Partikeln von Styrolbutadien-Polymer (z.B. ROPAQUE^{®}) zusammengesetzter Latex vermarktet worden. Eine Zugabe dieser Polymerpartikel zum Pigment in Mischung mit einem allenfalls notwenigen Weißmacher auf organischer Basis ermöglicht den Farbton adäquat abzugleichen. Der Laser schmilzt das Pigment und eliminiert die weiß-machende Wirkung.

### Beispiel 5. UV-Schutz

Pigmente laut Beispiel 1 und 2 welche Wismut enthalten können nach Exposition von Licht gelbliche oder graue Verfärbungen zeigen. Die Deckschicht laut Beispiel 3 dient nicht nur zum Schutz der farbigen Schichten sondern filtert aktiv die UV und nahen Blauanteile aus dem Spektrum und verhindert so ein vorzeitiges Vergilben der Wismutpigmente. Als Filter können alle aus der Fotographie oder aus dem Sonnenschutz bekannte Filterpolymere und Pigmente verwendet werden.

### Beispiel 6: Umhüllte Pigmente

Mehrschichtige Pigmente sind aus vielen Bereichen bekannt. Ein Kern aus dem laseraktivem Pigment laut Beispiel 1, 2 oder laut den analogen Ansprüchen wird mit einer laserzerstörbaren Hülle von hohem Farbwert, bevorzugter hohem Weißwert, umhüllt. Wismutsalze selbst können als weiße Hülle dienen wenn sie in einer zweiten Schicht auf die Oberfläche der Pigmentpartikel gefällt werden. Jeder andere Weismacher der durch bevorzugt PP-,PE- oder Papierverträgliche Laserenergie vom Pigmentpartikel abgespalten werden kann ist ebenfalls verwendbar. Schmelzbare organische Polymere gegebenenfalls in Mischung mit anorganischen stark streuenden Mikro-/Nanopigmenten sind hier erfindungsgemäß verwendbar.
Vorzugsweise werden die Pigmente so gefällt, dass die farbigen Metallsalze (2) in Inneren und die weißen Wismut- oder Antimonverbindungen als Außenschicht gefällt werden.

### Beispiel 7:

Eine Beschichtung mit folgender Zusammensetzung wird beschrieben. Wismutformiat und ein Reduktionsmittel, bevorzugt Natriumhypophosphit, werden gemeinsam auf eine Papieroberfläche aufgebracht. Ein Laser mit einer Energie von 5 Watt wird bei einer Schreibgeschwindigkeit von 100 cm / s zur Beschriftung verwendet. Die Schrift erscheint schwarz auf weißem Hintergrund.

### Beispiel 8:

Eine Beschichtung mit folgender Zusammensetzung wird beschrieben. Wismutcitrat oder ein anderes Salz einer nicht reduzierenden organischen Säure und ein Reduktionsmittel, bevorzugt Natriumhypophosphit, werden gemeinsam auf eine Papieroberfläche aufgebracht. Ein Laser mit einer Energie von 5 Watt wird bei einer Schreibgeschwindigkeit von 100 cm / s zur Beschriftung verwendet. Die Schrift erscheint braun-schwarz auf weißem Hintergrund.

## Patentansprüche

1. Pigmente bestehend aus einer Mischung und/oder den Reaktionsprodukten aus zumindest einem Wismut- und/oder Antimonsalz (1) gewählt aus der Gruppe BiO(OH), Bi₂O₂CO₃, BiONO₃, , BiOCl, BiOBr, BiOF, Bi-thiosulfat, Bi-fluosulfat, Salzen von Wismut mit organischen Säuren oder den analogen Antimonverbindungen und/oder einem Metallsalz (2) gewählt aus der Gruppe der Salze von Silber, Kupfer, Nickel, Kobalt und Zinn, wobei zumindest eines der Salze einen thermischen Zersetzungspunkt unter 400 °C aufweist.

2. Beschichtungszusammensetzung zur Beschichtung von Materialien bestehend aus einer Mischung und/oder den Reaktionsprodukten aus zumindest einem Wismut- und/oder Antimonsalz (1) gewählt aus der Gruppe BiO(OH), Bi₂O₂CO₃, BiONO₃, , BiOCl, BiOBr, BiOF, Bi-thiosulfat, Bi-fluosulfat, Salzen von Wismut mit organischen Säuren oder den analogen Antimonverbindungen und/oder einem Metallsalz (2) gewählt aus der Gruppe der Salze von Silber, Kupfer, Nickel, Kobalt und Zinn, wobei zumindest eines der Salze einen thermischen Zersetzungspunkt unter 400 °C aufweist.

3. Beschichtungszusammensetzung nach Anspruch 2, **dadurch gekennzeichnet, dass** die Zusammensetzung zusätzlich ein Bindemittel enthält.

4. Pigmente nach Anspruch 1 oder Beschichtungszusammensetzung nach einem der Ansprüche 2 oder 3, **dadurch gekennzeichnet, dass** die Salze (1) und/oder Metallsalze (2) als Oxalate, Carbonate, Formiate, Acetate, Citrate, Tatrate, Hydroxide, Carbonate, Phosphate, Hypophosphite oder als deren basische Mischsalze vorliegen.

5. Pigmente nach Anspruch 1 oder 4 oder Beschichtungszusammensetzungen nach einem der Ansprüche 2 bis 4, **dadurch gekennzeichnet, dass** zusätzlich zu den Metallsalzen Reduktionsmittel zugegeben werden oder Anionen für diese Metallsalze gewählt werden, die thermisch aktivierbar sind wie Salze der Ameisensäure, Oxalsäure, reduzierende Stickstoffwasserstoffverbindungen, wie Hydrazine, oder anorganische Reduktionsmittel wie Zinn(II)salze, Hypophosphite, Dithionite oder Borwasserstoffverbindungen.

6. Pigmente oder Beschichtungszusammensetzung nach einem der vorhergehenden Ansprüche, **dadurch gekennzeichnet, dass** die Partikel der Metallsalze (1 und/oder 2) eine Größe von maximal drei Millimeter aufweisen.

7. Pigmente oder Beschichtungszusammensetzung nach Anspruch 1 bis 5, **dadurch gekennzeichnet, dass** die Partikel der Metallsalze (1 und/oder 2) eine Größe von 0,5 bis 50 Mikrometer aufweisen.

8. Pigmente oder Beschichtungszusammensetzungen nach einem der vorhergehenden Ansprüche, **dadurch gekennzeichnet, dass** als Salz (1) ein Wismutsalz vorzugsweise Wismutsubcarbonat, Wismutsubnitrat, Wismutthiosulfat oder ein anderes Salz einer organischen Säure und als Metallsalz (2) Kupferformiat gewählt werden.

9. Pigmente oder Beschichtungszusammensetzungen nach einem der vorhergehenden Ansprüche, **dadurch gekennzeichnet, dass** der Mischung noch weitere Metallsalze vorzugsweise Mangan-, Kobalt-, Chrom- und Eisensalze zugegeben.

10. Pigmente oder Beschichtungszusammensetzungen nach einem der vorhergehenden Ansprüche, **dadurch gekennzeichnet, dass** als Salz (1) Wismutsubcarbonat und als Metallsalz (2) Nickelformiat und/oder Nickelcarbonat und/oder Nickelhydroxid gewählt werden.

11. Pigmente oder Beschichtungszusammensetzungen nach einem der vorhergehenden Ansprüche, **dadurch gekennzeichnet, dass** als Salz (1) Wismutsubcarbonat und als Metallsalz (2) Kobaltformiat und/oder Kobaltcarbonat und/oder Kobalthydroxid gewählt werden.

12. Pigmente oder Beschichtungszusammensetzungen nach einem der vorhergehenden Ansprüche, **dadurch gekennzeichnet, dass** als Salz (1) Wismutsubcarbonat durch andere Wismutsalze ganz oder teilweise ersetzt wird.

13. Pigmente oder Beschichtungszusammensetzungen nach einem der vorhergehenden Ansprüche, **dadurch gekennzeichnet, dass** beim Metallsalz (2) das Formiat durch andere thermolabile oder reduzierende Anionen ganz oder teilweise ersetzt wird, vorzugsweise Acetate, Hypophosphite oder andere Salze organischer Säuren.

14. Pigmente oder Beschichtungszusammensetzungen nach einem der vorhergehenden Ansprüche, **dadurch gekennzeichnet, dass** das Salz bzw. die beiden Salze (1 und 2) mit einer Schicht einer weißen Verbindung umhüllt sind oder mit weißen Partikel vermischt sind die nach Auftreffen der thermischen Energie transparent wird oder sich zumindest farblich stark abschwächt.

15. Pigmente oder Beschichtungszusammensetzungen nach einem der vorhergehenden Ansprüche, **dadurch gekennzeichnet, dass** als Hülle die Wismut oder Antimonverbindung (1) selbst dient und vorzugsweise selbst in ein farbiges Pigment bevorzugt schwarzes Pigment umgewandelt werden kann.

16. Papier, Etiketten, Pappe, Wellkartons, Folien, spritz- oder druck-gegossene Kunststoffteile, Metall, keramische Oberflächen, Lackschichten oder Korrosionsschutzschichten beschichtet mit Pigmenten oder einer Beschichtungszusammensetzung gemäß Anspruch 1 bis 15.

17. Papier, Etiketten, Pappe, Wellkartons, Pigmentpartikel, Folien, spritz- oder druck-gegossene Kunststoffteile, Metall, keramische Oberflächen, Lackschichten oder Korrosionsschutzschichten nach Anspruch 16, **dadurch gekennzeichnet, dass** der Aufbau durch Einwirkung einer pixel- oder vektorartig arbeitenden Lichtquelle räumlich definiert und strukturiert für das menschliche Auge erkennbar farblich verändert ist.

18. Papier, Etiketten, Pappe, Wellkartons, Folien, spritz- oder druck-gegossene Kunststoffteile, Metall, keramische Oberflächen, Lackschichten oder Korrosionsschutzschichten nach Anspruch 17, **dadurch gekennzeichnet, dass** der Aufbau durch Laserlicht, LED- Licht, Kurzbogenlampen, Blitzentladungslampen oder durch Thermoschreibköpfe räumlich definiert und strukturiert für das menschliche Auge erkennbar farblich verändert wird.

19. Papier, Etiketten, Pappe, Wellkartons, Folien, spritz- oder druck-gegossene Kunststoffteile, Metall, keramische Oberflächen, Lackschichten oder Korrosionsschutzschichten nach einem der Ansprüche 16 bis 18, **dadurch gekennzeichnet, dass** die für das menschliche Auge erkennbare Veränderung der Aufbaus gegebenenfalls zusätzlich durch thermische oder elektromagnetische Strahlung oder durch mechanische Behandlung fertig gestellt bzw. fixiert wird.

20. Papier, Etiketten, Pappe, Wellkartons, Folien, spritz- oder druck-gegossene Kunststoffteile, Metall, keramische Oberflächen, Lackschichten oder Korrosionsschutzschichten, nach einem der Ansprüche 16 bis 19, **dadurch gekennzeichnet, dass** über den Metallsalzschichten eine Deckchicht mit Licht-streuenden Eigenschaften verwendet wird, die den Farbeffekt überdeckt aufgebracht ist.

21. Papier, Etiketten, Pappe, Wellkartons, Folien, spritz- oder druck-gegossene Kunststoffteile, Metall, keramische Oberflächen, Lackschichten oder Korrosionsschutzschichten nach Anspruch 20, **dadurch gekennzeichnet, dass** die Licht streuenden Partikel aus schmelzbarem Latex bestehen, die eine rückgestreute Lichtfarbe von weiß oder weißlich haben und durch Schmelzen der Latexpartikel zu einer transparenten Schicht umwandeln.

22. Papier, Etiketten, Pappe, Wellkartons, Folien, spritz- oder druck-gegossene Kunststoffteile, Metall, keramische Oberflächen, Lackschichten oder Korrosionsschutzschichten nach Anspruch 21, **dadurch gekennzeichnet, dass** die Licht streuenden Partikel aus Polystyrol, Polyvinylacetat, Celluloseestern oder Ethern, anderen Vinylpolymeren, Acrylaten, Methacylaten, Polyalkydharzen, oder deren Mischpolymeren bzw. Mischungen bestehen.

23. Papier, Etiketten, Pappe, Wellkartons, Folien, spritz- oder druck-gegossene Kunststoffteile, Metall, keramische Oberfläche, Lackschichten oder Korrosionsschutzschichten nach einem der Ansprüche 20 bis 22, **dadurch gekennzeichnet, dass** die transparente Deckschicht eine Dicke von < 700 nm aufweist.

24. Verfahren zur Herstellung einer laser- und/oder thermisch farbveränderlichen Beschichtung gemäß einem der Ansprüche 1 bis 15, **dadurch gekennzeichnet, dass** das Salz (1) und das Metallsalz (2) zuerst in bevorzugt wässriger Lösung zur Reaktion gebracht werden und dass das oder die Reaktionsprodukt(e) einzeln oder als Mischung zur Beschichtung verwendet werden.

25. Verfahren zur Beschichtung von Papier, Etiketten, Pappe, Wellkartons, Folien, spritz- oder druck-gegossene Kunststoffteile, Metall, keramische Oberflächen, Lackschichten oder Korrosionsschutzschichten, nach einem der Ansprüche 16 bis 24, **dadurch gekennzeichnet, dass** die Aufbringung der laser- und thermosensitiven Pigmente oder der Beschichtungszusammensetzung durch chemische Prozesse, adsorptive Anlagerung aus Lösung, Anfiltern, kovalente Kopplung aus Lösung, oberflächen-katalysierte Verfahren, druck-, lack- oder Papier, etikettentechnische Verfahren wie Streichen Aufrakeln, Sprühen, Tauchbeschichten oder gängige Druckverfahren, wie Tief- Flexo-, Sieb-, Offset-, Digitaldruck, Curtain Coating Blade-Coating, oder Walzenauftragsverfahren mit Walzen- Gleich- oder Gegenlauf erfolgt.

26. Verfahren nach Anspruch 25, **dadurch gekennzeichnet, dass** auf die Oberfläche des Materials die Partikel der Metallsalze (1 und/oder 2) mit einem Adhäsionsmittel gebunden werden.

27. Verfahren nach Anspruch 26, **dadurch gekennzeichnet, dass** das Adhäsionsmittel ein Kleber auf Stärke- oder modifizierter Cellulosebasis, auf Basis von Polyvinylalkohol, Polyvinylpyrrolidon, deren Copolymeren oder auf Basis biologisch verträglicher und/oder abbaubarer Polymere ist.

28. Verfahren zur Beschriftung von Papier, Etiketten, Pappe, Wellkartons, Folien, spritz- oder druck-gegossenen Kunststoffteile, Metall, keramischen Oberflächen, Lackschichten oder Korrosionsschutzschichten nach einem der Ansprüche 16 bis 25, **dadurch gekennzeichnet, dass** der Aufbau durch Einwirkung von Licht oder durch direkten Kontakt oder durch starke Annäherung an heiße Objekte räumlich definiert und strukturiert für das menschliche Auge erkennbar farblich verändert wird.

29. Verfahren nach Anspruch 28, dass zumindest ein Teil der farblichen Veränderungen durch eine chemische Reaktion von thermischen Zersetzungsprodukten des Metallsalzes (2) oder der reduzierenden Anionen mit dem Salz von Bi oder Sb hervorgerufen wird.

30. Verfahren nach einem der Ansprüche 28 bis 29, **dadurch gekennzeichnet, dass** die farblichen Veränderungen durch Generieren von chromophoren Metall- und/oder Metalloxidpartikel aus farblosen und/oder farbschwachen Metallsalzen durch thermische Einwirkung des Lasers erfolgt.

31. Verfahren nach einem der Ansprüche 28 bis 30, **dadurch gekennzeichnet, dass** die Deckschicht durch den Laser in eine transparente, geschmolzene Schicht umgewandelt wird.

32. .Verfahren nach einem der Ansprüche 28 bis 31, **dadurch gekennzeichnet, dass** zur räumlich definierten und strukturierten farblichen Veränderung der Beschichtung Laser mit einer Leistung bis zu 300 Watt verwendet wird.

33. Verfahren nach Anspruch 32, **dadurch gekennzeichnet, dass** der/die Laser (ein) Kohlendioxidlaser ohne externe Gasversorgung oder (eine) Laserdiode ist/sind.

34. Verfahren nach einem der Ansprüche 28 bis 33, **dadurch gekennzeichnet, dass** die Absorption der Laserlichtenergie durch Laserlicht-absorbierende Zusätze in der Schicht gesteigert wird.

35. Schreibsystem zur Beschriftung von Papier, Etiketten, Pappe, Wellkartons, Folien, spritz- oder druck-gegossene Kunststoffteile, Metall, keramische Oberflächen, Lackschichten oder Korrosionsschutzschichten gemäß einem der Ansprüche 16 bis 23, **dadurch gekennzeichnet, dass** zumindest ein Laser der auf das zu beschreibende Material gerichtet ist, ein Fokussiersystem für den Strahl, ein Strahlablerikungssystem, ein Modulationssystem zur Steuerung der Laserintensität, ein Vorschubsystem für das Medium und die notwendige Elektronik zur Umwandlung der Befehle des Computers in Steuerinformation des Beschriftungssystems in einer Einheit vorzugsweise einem Gehäuse integriert, aufweist.
